Europäisches Patentamt

(19) European Patent Office

Office européen des brevets

(11) Publication number : **0 672 705 A2**

## (12) EUROPEAN PATENT APPLICATION

(21) Application number : **95301469.3**

(22) Date of filing : **07.03.95**

(51) Int. Cl.$^6$ : **C08J 3/09**, C08L 101/00,
// C09K7/06 , (C08L101/00,
33:06)

(30) Priority : **16.03.94 US 213885**

(43) Date of publication of application :
**20.09.95 Bulletin 95/38**

(84) Designated Contracting States :
**BE DE ES FR GB IT LU NL SE**

(71) Applicant : **CALGON CORPORATION**
**Route 60 and Campbell's Run Road**
**Pittsburgh, Pennsylvania 15230 (US)**

(72) Inventor : **Hunter, Wood E.**
**637 Beverly Road**
**Pittsburgh, PA 15243 (US)**
Inventor : **Loeffler, Randy J.**
**6 Columbia Drive**
**Carnegie, PA 15106 (US)**

(74) Representative : **Nash, David Allan**
**Haseltine Lake & Co.**
**Hazlitt House**
**28 Southampton Buildings**
**Chancery Lane**
**London WC2A 1AT (GB)**

(54) **Stable high solids polymer compositions and a method for preparing the same.**

⑤ Improved, high solids polymer compositions are prepared via the use of an effective amount of an alkyl(meth)acrylate polymer or an alkyl (meth)acrylate/carboxylic acid polymer as a stabilizer against settling/compaction. Thus, in a preferred mode, a polymer composition containing in excess of about 50%, by weight, polymer solids is stabilized against settling/compaction via addition of an effective amount of a lauryl (meth)acrylate or a lauryl (meth)acrylate/acrylic acid polymer.

EP 0 672 705 A2

## BACKGROUND OF THE INVENTION

Water soluble polymers can be prepared in several forms. For instance, it is known in the art that water-soluble polymers can be dispersed into the oil phase of water-in-oil emulsions. Conventional emulsion polymerization techniques generally involve either:

(1) forming a water-in-oil emulsion of an aqueous solution of at least one water-soluble ethylenically unsaturated monomer in an inert hydrophobic liquid organic dispersion medium and polymerizing said monomer or monomers in said dispersion medium to form a polymer emulsion; or

(2) forming a water soluble polymer and then emulsifying the polymer solids into an emulsion having a hydrophobic liquid as the continuous phase.

In such polymerization methods, virtually any water soluble monomer containing a $CH_2 = C$ functional group can be polymerized and dispersed into a water-in-oil system. Thus, anionic, cationic, nonionic and amphoteric emulsion polymers can be prepared by conventional emulsion polymerization techniques.

Water-in-oil emulsions are generally comprised of three primary components including: (1) a hydrophobic phase; (2) an aqueous phase; and (3) a surfactant system. The hydrophobic phase generally comprises from about 5 to about 75%, by weight, of the emulsion. Any inert hydrophobic liquid can be used as the hydrophobic phase. Preferred hydrophobic liquids, for example, are selected from the group consisting of benzene, xylene, toluene, mineral oils, kerosene, napthas, petroleums, and blends of aromatic and aliphatic hydrocarbons containing 4 or greater carbon atoms. Particularly preferred hydrophobic liquids are those selected from the group consisting of a narrow fraction of a branch-chain hydrocarbon sold by Witco Chemical Company under the tradename Kensol 61® and branch-chain isoparafinic hydrocarbons sold by Exxon under the tradename Isopar®.

The aqueous phase generally comprises from about 25 to about 95%, by weight, of the emulsion. This phase comprises the desired ethylenically unsaturated monomer or monomers and water. Additionally, this phase may contain an effective amount of a chelating agent, such as a sodium salt of ethylene diamine tetracetic acid (EDTA) or nitrilotriacetate (NTA), buffers, chain transfer agents or other additives. The monomer(s) to be polymerized generally comprise about 10 to about 60%, by weight, of the aqueous phase, with the balance being primarily water.

The surfactant system generally comprises about 0.5 to about 20%, by weight, of the emulsion. Any surfactant system which effectively disperses an aqueous phase into a hydrophobic phase can be used. See, for example, U.S. Pat. No. 3,826,771, which discloses the use of sorbitan monooleate as water-in-oil emulsifying agent; U.S. Pat. No. 3,278,506, which discloses the use of ethylene oxide condensates of fatty acid amides as emulsifiers; U.S. Pat. No. 3,284,393, which discloses the use of hexadecyl sodium pthalate, sorbitan monooleate, sorbitan monostearate, cetyl or stearyl sodium pthalate and metal soaps as water-in-oil emulsifiers; and U.S Pat. No. 4,024,097, which discloses the use of surfactant systems comprising an oil-soluble alkanolamide, such as Witcamide® 511, which is commercially available from Witco Chemical Company, and one or more co-emulsifiers selected from the group consisting of unesterified dialkanol fatty amides, quaternized ammonium salts of fatty tertiary amines, salts of fatty tertiary amines, alkaline metal salts of fatty acids and alkyl or alkylaryl sulfates or sulfonates.

U.S. Pat. Nos. 4,672,090 and 4,772,659 disclose a surfactant system which comprises 25 to 85%, by weight, an oil-soluble alkanolamide; 5 to 35%, by weight, a polyoxyethylene derivative of a sorbitan ester; and 0 to 50%, by weight, sorbitan monooleate. Additionally, other surfactants, such as sorbitan monostearate, may be used in combination with these primary surfactants.

Emulsion polymers are generally produced by first mixing the surfactant system with the hydrophobic phase. The aqueous phase is then typically prepared by adding the monomer(s) to water in the desired concentration. Additionally, a chelant, such as a sodium salt of EDTA, may be added to the aqueous solution and the pH of the aqueous phase may be adjusted to between about 3.0 and 10.0, depending on the monomer(s) used. The aqueous monomer phase is then added to the mix containing the hydrophobic liquid and the surfactant system. The surfactant system enables the aqueous phase, which contains the monomer or monomers to be polymerized, to be emulsified into the hydrophobic phase. Polymerization is then carried out in the presence of a free radical generating catalyst, and the temperature of the reaction mixture is generally maintained between about 5° and about 100°C, preferably between about 20° and about 50°C, resulting in a water-in-oil emulsion polymer. Any type of free radical initiator can be used, including, for example persulfate and azo initiators. High energy irradiation can also be used to initiate polymerization.

The following patents provide further background relative to the manufacture of emulsion polymers: 3,041,318; 3,284,393; B1 Re 28,474; B1 Re 28,576; 3,915,920; 3,996,180; 3,997,492; 4,035,317 and 4,833,198. While certain prior art references theoretically suggest emulsions containing in excess of about 70% (weight basis) active polymer, commercial emulsion polymer compositions generally contain substantial portions of water and are much less active. For example, U.S. Pat. No. 4,035,317 states that: "Two problems still existed, however, in the first place, the cost of transporting the emulsion is materially higher than if the polymer per se were being transported. Since the emulsions contain, on the average, only about 25-30% polymer, 70-75% of the material shipped is useless oil and water. Secondly, the emulsions can present a stability problem when exposed to temperatures below their freezing point. Thus, problems plaguing the emulsion polymerization art relate to the need to increase the concentration of polymer solids in emulsion polymer compositions and to improve the stability of such compositions.

Water soluble polymer compositions containing in excess of about 60% solids are currently only commercially available in dry or gel form. Dry polymers are generally prepared by drying conventional solution polymers, and gels are simply high viscosity polymer solutions which can not be transported as liquids. They are generally adherent, tough, rubbery substances which retain their shape when placed on flat surfaces. Gels are not generally used in gel form but instead as dilute solutions of the polymer. Dilution methods may be difficult and oftentimes involve mechanical steps which result in the degradation of certain properties of the polymers, such as molecular weight.

To obtain polymers having high molecular weights and good water solubility properties, it is generally necessary to prevent crosslinking reactions during polymerization to the extent possible. In this respect, it is desirable to prepare polymers under relatively mild conditions, e.g., conducting polymerization reactions using relatively low monomer concentrations.

Unfortunately, aqueous solution polymerization techniques which use low monomer concentrations require that the resulting solution polymers be dried to prepare powdered polymers, thus resulting in increased manufacturing costs and degradation of polymer properties such as molecular weight and solubility.

Though there is a long felt need in industry for stable, high molecular weight, soluble, easily handled polymer delivery systems containing in excess of about 50 weight %, preferably 60%, and most preferably 70% active polymer, this need has generally not been met because of the art's inability to efficiently concentrate liquid polymer compositions to a stable form having a high polymer content without substantially degrading the resulting high solids polymers.

Towards this end, copending U.S. Patent Application Serial Nos. 07/993,800; 07/993,990; and 07/993,738 relate to methods for concentrating water-in-oil polymer compositions using evaporation and centrifugation techniques, alone or in combination. The processes of these applications result in substantially non-aqueous, high solids polymer compositions which generally contain less than about 5% water and greater than about 60% polymer solids.

The following U.S. patents also relate to methods for concentrating polymer compositions prepared by emulsion polymerization techniques: 3,88,945; 4,021,399; 4,025,353; 4,528,321; 4,506,062; and 5,155,156. Generally, the resulting compositions tend to settle and compact during storage, which results in phase separation. Thus, polymer solids tend to settle into a "cake" in the bottom of the polymer storage device containing them, with formation of a discrete hydrophobic liquid phase above the polymer solids. This type of separation can render the polymer unusable, as it becomes very difficult to re-disperse the polymer solids and/or to remove separated polymer solids from the bottom of the storage device.

Prior art attempts at stabilizing high solids polymer compositions are described in U.S. Patents 3,915,920 and 3,996,180. Additionally, U.S. Pat. No. 4,833,198 discloses the use of a suspending agent comprising: a) a hydrophobic particulate matter such as silicon dioxide; and b) a hydrophobic polymer such as a lauryl methacrylate/ acrylic acid copolymer. This reference relates to a suspension polymerization technique, wherein an aqueous phase, containing a water-soluble polymer, is suspended into a hydrophobic phase using the above described two component stabilizer. Relative to the suspensions of the '198 patent, emulsion polymerization techniques are not used and the polymer concentrations do not exceed about 50% polymer, based on total weight of the suspension.

Additionally, Dowbenko and Hart, in "Non-aqueous Dispersions as Vehicles for Polymer Coatings", Ind. Eng. Chem. Pro. Res. Develop; Vol. 12, No. 1, 1973, discuss steric stabilization of non-aqueous dispersions.

## SUMMARY OF THE INVENTION

The instant invention relates, in general terms, to a method for stabilizing high solids polymer/emulsifying surfactant/hydrophobic liquid compositions prepared via emulsion polymerization techniques and to the improved compositions resulting from this method. The method utilizes an effective amount of a lauryl (meth)acrylate or a lauryl (meth)acrylate/carboxylic acid polymer to stabilize a high solids polymer composition prepared via emulsion polymerization and concentration techniques against settling and/or separation during storage.

The resulting polymer compositions, which generally contain greater than about 50%, preferably greater than about 60%, and most preferably greater than about 70% polymer solids, based on total composition weight, are stable, high solids cationic, anionic, nonionic or amphoteric polymer compositions which have improved separation/stability properties.

## DETAILED DESCRIPTION OF THE INVENTION

In its broadest sense, the instant invention relates to a method for stabilizing a high solids polymer composition prepared by an emulsion polymerization technique, preferably in combination with one or more concentration techniques, wherein the composition to be stabilized contains greater than about 50%, based on the total composition weight, polymer solids, preferably greater than about 60% and most preferably greater than about 70%; wherein the method comprises adding to a high solids polymer composition initially prepared by an emulsion polymerization technique followed by, preferably, one or more concentration techniques, an effective amount. for the purpose of stabilizing said high solids polymer composition against settling, separation and/or compaction, an alkyl(meth)acrylate or an alkyl (meth)acrylate/carboxylic stabilizer, preferably a stabilizer selected from the group consisting of polymers prepared from: 1) a) one or more $C_4$-$C_{20}$ straight or branched alkyl acrylates or methacrylates; and b) at least one polymerizable carboxylic monomer, preferably acrylic acid or methacrylic acid; 2) a) one or more $C_4$-$C_{20}$ alkyl aryl acrylates or methacrylates; and b) a polymerizable carboxylic acid as defined above; and 3) a) one or more $C_4$-$C_{20}$ haloallyl acrylates or methacrylates; and b) a polymerizable carboxylic acid as defined above; wherein the weight ratio of a) :b) ranges from about 100:0 to about 75:25, preferably from about 99.95:0.05 to about 90:10, more preferably from about 99.9:0.1 to about 98:2, and wherein said polymers have a weight average molecular weight of about 50,000 to about $10 \times 10^6$, preferably from about 500:000 to about $8 \times 10^6$, more preferably from about $1 \times 10^6$ to about $6 \times 10^6$, as determined by low angle light scattering. As used herein, "polymerizable carboxylic monomers" include those carboxylic acids which can be copolymerized with $C_4$-$C_{20}$ straight or branched alkyl acrylates or methacrylates via conventional free radical initiated polymerization techniques.

The resulting stabilized compositions are also claimed. Preferably, these compositions are pourable compositions which are essentially non-aqueous and which contain in excess of about 50% polymer solids and less than about 5% water, preferably in excess of about 60% polymer and less than about 3% water and more preferably in excess of about 70% polymer solids and less than about 2% water, all percentages based on total composition weight. These compositions additionally contain an effective amount, preferably at least about 0.05%, based on total composition weight, of an alkyl (meth)acrylate or an alkyl (meth)acrylate/carboxylic acid stabilizer, preferably a stabilizer selected from the group consisting of: 1) a) one or more $C_4$-$C_{20}$ straight or branched alkyl acrylates or methacrylates; and b) at least one polymerizable carboxylic monomer, preferably acrylic acid or methacrylic acid; 2) a) one or more $C_4$-$C_{20}$ alkyl aryl acrylates or methacrylates; and b) a polymerizable carboxylic acid as defined above; and 3) a) one or more $C_4$-$C_{20}$ haloallyl acrylates or methacrylates; and b) a polymerizable carboxylic acid as defined above; wherein the weight ratio of a) :b) and the molecular weight of the polymer are as described in the preceding paragraph.

Further, the instant invention relates to a method for preparing stabilized, high solids polymer compositions, which method comprises: A) removing water and increasing the polymer concentration of a water-in-oil polymer composition preferably prepared by an emulsion polymerization technique, wherein the composition comprises: a water soluble polymer, one or more emulsifying surfactants, water and a hydrophobic liquid; by 1) dehydrating said composition via an evaporation step to remove some portion of water therefrom and to form a polymer/emulsifying surfactant/hydrophobic liquid composition having low water content, i.e., a low water content relative to the initial water content of the initial water-in-oil polymer composition; and 2) centrifuging, evaporating or filtering said polymer/emulsifying surfactant/hydrophobic liquid composition of step 1) to remove some portion of said hydrophobic liquid therefrom, thereby producing a concentrated polymer/emulsifying surfactant/hydrophobic liquid composition containing less than about 5%, preferably less than about 3% and more preferably less than about 2%, based on total composition weight, of water and in excess of about 50% polymer solids, preferably in excess of about 60% polymer solids, more preferably in excess of about 70% polymer solids; and B) adding an effective amount of an alkyl(meth)acrylate or an alkyl (meth)acrylate/carboxylic acid stabilizer, preferably a stabilizer selected from the group consisting of: 1) a) one or more $C_4$-$C_{20}$ straight or branched alkyl acrylates or methacrylates; and b) at least one polymerizable carboxylic monomer, preferably acrylic acid or methacrylic acid; 2) a) one or more $C_4$-$C_{20}$ alkyl aryl acrylates or methacrylates; and b) a polymerizable carboxylic acid as defined above; and 3) a) one or more $C_4$-$C_{20}$ haloallyl acrylates or methacrylates; and b) a polymerizable carboxylic acid as defined above; wherein the weight ratio of a) :b) ranges from about 100:0 to about 75:25, preferably about 99.95:0.05 to about 90:10, more preferably from about 99.9:0.1 to about 98.0:2.0, and wherein said polymers have a weight average molecular weight of about 50,000 to about $10 \times 10^6$, preferably about 500,000 to about $8 \times 10^6$, and more preferably about $1 \times 10^6$ to about $6 \times 10^6$, as determined by

low angle light scattering; to the concentrated polymer/emulsifying surfactant/hydrophobic liquid composition of step A), thereby improving its stability characteristics.

The instant invention is also directed to a water soluble polymer/hydrophobic liquid/emulsifying surfactant composition, which contains less than about 5 weight %, preferably less than about 3%, more preferably less than about 2% water, greater than about 50 weight % polymer solids, preferably greater than about 60%, more preferably greater than about 70% polymer solids and at least about 0.05 weight %, preferably at least about 0.1%, more preferably at least about 0.5% and most preferably from about 0.5 to about 5.0% of an alkyl (meth)acrylate or an alkyl (meth)acrylate/carboxylic acid stabilizer, preferably a stabilizer selected for the group consisting of: 1) a) one or more $C_4$-$C_{20}$ straight or branched alkyl acrylates or methacrylates; and b) at least one polymerizable carboxylic monomer, preferably acrylic acid or methacrylic acid; 2) a) one or more $C_4$-$C_{20}$ alkyl aryl acrylates or methacrylates; b) and a polymerizable carboxylic acid as defined above; and 3) a) one or more $C_4$-$C_{20}$ haloallyl acrylates or methacrylates; and b) a polymerizable carboxylic acid as defined above; wherein the weight ratio of a) :b) and the molecular weights of the polymers are as described above.

Additionally, the instant invention is directed to a method for preparing a stabilized, concentrated water-in-oil polymer composition from a composition initially comprising: 1) about 25 to about 95%, based on total composition weight, of an aqueous phase comprising about 10 to about 60%, based on the weight of 1), of a water soluble polymer, and the balance substantially water; 2) about 0.5 to about 20%, based on total composition weight, of at least one emulsifying surfactant; and 3) about 25 to about 95%, based on total composition weight, of a hydrophobic liquid, which method comprises: A) dehydrating the initial composition via a dehydration means, preferably an evaporation means, more preferably via a falling-film evaporator, to produce a polymer/emulsifying surfactant/hydrophobic liquid composition which is substantially water free, i.e., which contains less than about 5%, preferably less than 3%, more preferably less than about 2%, and most preferably from about 0.1 to about 1.5%, water; B) further concentrating the product of step A) via a concentrating means, preferably via centrifuging said polymer/emulsifying surfactant/hydrophobic liquid composition so as to remove some portion of said hydrophobic liquid therefrom, thereby producing a concentrated polymer/emulsifying surfactant/hydrophobic liquid composition and a raffinate, wherein said concentrated polymer/emulsifying surfactant/hydrophobic liquid composition contains less than about 5%, preferably less than about 3%, more preferably less than about 2%, water; greater than about 60%, more preferably greater than about 70%, polymer; and about 0.1 to about 10% emulsifying surfactant; C) optionally treating said raffinate in a second separation device, such as a centrifuge, filter or evaporator, preferably a centrifuge, thereby producing a second concentrated polymer composition and a second raffinate stream; D) optionally blending said second concentrated polymer composition from said second separation device with said concentrated polymer/emulsifying surfactant/hydrophobic liquid composition and recycling or disposing of said second raffinate stream; and E) adding to said concentrated polymer/emulsifying surfactant/hydrophobic liquid composition an effective amount of an alkyl (meth)acrylate or an alkyl (meth)acrylate/carboxylic acid stabilizer, preferably a stabilizer selected from the group consisting of: 1) a) one or more $C_4$-$C_{20}$ straight or branched alkyl acrylates or methacrylates; and b) at least one polymerizable carboxylic monomer, preferably acrylic acid or methacrylic acid; 2) a) one or more $C_4$-$C_{20}$ alkyl aryl acrylates or methacrylates; and b) a polymerizable carboxylic acid as defined above; and 3) a) one or more $C_4$-$C_{20}$ haloallyl acrylates or methacrylates; and b) a polymerizable carboxylic acid as defined above; wherein the weight ratio of a) :b) and the molecular weights of the stabilizers are as described above.

In this preferred method, the evaporator is preferably a falling-film evaporator, more preferably a thin film evaporator, the centrifuge of B) is preferably a decanter centrifuge and the centrifuge of C) is preferably a partially ejecting disk centrifuge. Also, if the polymer concentration of the initial water-in-oil polymer compositions exceeds about 25%, based on total composition weight, the starting composition is preferably diluted with a suitable hydrophobic liquid oil so as to reduce the polymer concentration to less than about 25%, preferably to between about 1 to about 15% by weight, based on total composition weight. Compositions produced by this process are also claimed.

The inventors believe that any type of high solids polymer composition prepared by an emulsion polymerization technique, optionally using one or more concentration techniques, can be stabilized by the instant method. Thus, terms such as "high solids water-in-oil polymer composition" "high solids polymer composition" and "high solids polymer emulsions" include virtually any composition containing greater than about 50% weight %, preferably greater than about 60%, and more preferably greater than about 70% of a water soluble polymer prepared from an ethylenically unsaturated monomer or monomers in an emulsion polymerization process, wherein said polymer is polymerized in an aqueous phase which is dispersed, by one or more surfactants, in a system having a hydrophobic liquid as the continuous phase. Further, such compositions, through concentration techniques, if necessary, comprise less than about 5%, by weight, water, preferably less than about 3% and more preferably less than about 2% water.

The stabilized, high solids polymer compositions disclosed herein can contain any type of water soluble polymer prepared from one or more ethylenically unsaturated monomers. Thus, the polymers may be nonionic, cationic, anionic or amphoteric. The instant invention is generally applicable, for example, to nonionic and anionic water soluble polymers prepared from one or more nonionic monomers, including, inter alia, N-vinyl pyrolidone, N-vinyl formamide, ethoxylated acrylate and methacrylate esters such as hydroxyethyl methacrylate (HEM) and the 5, 10 and 20 mole ethoxylates of HEM, acrylamide, methacrylamide, N,N-dimethylacrylamide, N-i-propylacrylamide, N-tert-butylacrylamide and/or one or more anionic monomers, such as acrylic acid, $\alpha$-halo acrylic acid, maleic acid or anhydride, itaconic acid, vinyl acetic acid, allyl acetic acid, methacrylic acid, acrylonitrile, vinyl sulfonic acid, allyl sulfonic acid, vinyl phosphonic acid, vinyl acetate, 2-acrylamido-2-methylpropane sulfonic acid (AMPSA), styrene sulfonic acid, hydroxyalkyl acrylates, $\beta$-carboxyethylacrylic acid, $\beta$-sulfoalkyl (meth)acrylates, sulfoalkyl methacrylates, allyloxy-2-hydroxypropane sulfonic acid, and methacrylamido hydroxypropyl sulfonic acid, alone or in combination, and salts of such polymers.

The polymers of this invention may also be cationic, such as polymers made from dimethyldiallyl ammonium chloride (DMDAAC), diethyldiallyl ammonium chloride (DEDAAC), dimethyldiallyl ammonium bromide (DMDAAB), diethyldiallyl ammonium bromide (DEDAAB), methyacryloyl-oxyethyltrimethyl ammonium chloride (METAC), acryloy-oxyethyltrimethyl ammonium chloride (AETAC), methacryloy-oxyethyltrimethyl ammonium methosulfate (METAMS), acryloyoxyethyltrimethyl ammonium methosulfate (AETAMS), methacrylamidopropyltrimethyl ammonium chloride (MAPTAC), acrylamidopropyl trimethyl ammonium chloride (APTAC) dimethylaminoethylacrylate, dimethyl aminoethyl methacrylate, dimethylamino propylmethacrylamide, alone or in combination, and polymers made by polymerizing any of the above listed cationic monomers with nonionic monomers such as any of the above listed nonionic monomers, particularly acrylamide, methacrylamide or N, N-dimethylacrylamide.

Any amphoteric polymer can be used in the instant compositions, including, but not limited to, polymers made by polymerizing one or more of the above listed anionic monomers with one or more of the above listed cationic monomers, and especially polymers made from acrylic acid, methacrylic acid and/or AMPSA with DMDAAC, AETAC, METAC, METAMS, APTAC and/or MAPTAC. Optionally, nonionic monomers may be included. Also, betaine polymers can be made from N(3-sulfopropyl)-N-methacryloyloxyethyl-N,N-dimethyl ammonium betaine, alone or in combination with various nonionic monomers.

Generally, the anionic, nonionic, cationic or amphoteric polymers present in the instant high solids water-in-oil polymer compositions have molecular weights greater than about 100,000, as determined by viscometry. Preferably, molecular weights range from about 500,000 to about 50,000,000.

The instant process involves stabilizing high solids polymer compositions containing greater than about 50% polymer solids, preferably greater than about 60% polymer solids, and more preferably greater than about 70% polymer solids via the addition of an effective amount of an alkyl methacrylate/carboxylic-type polymer. The resulting polymer compositions are generally in a stable, pourable form, wherein the properties of the polymers in the starting emulsion, particularly the molecular weight and/or solubility characteristics, are not substantially altered. These polymer compositions have improved storage stability, measured in terms of compaction and settling.

The compositions produced by the instant process are novel polymer/emulsifying surfactant/hydrophobic liquid/stabilizer compositions which contain less than about 5%, preferably less than about 3%, and more preferably less than about 2%, based on total composition weight, water. These compositions also comprise: a) at least about 50%, by weight, a water soluble polymer, preferably at least about 60%, more preferably at least about 70% polymer; b) at least about 10%, by weight, hydrophobic liquid preferably about 10% to 40%; c) at least about 0.1%, by weight, of at least one emulsifying surfactant; and d) an effective amount of an alkyl-(meth)acrylate or an alkyl (meth)acrylate/carboxylic stabilizer, preferably at least about 0.05 weight %, more preferably at least about 0.1%, still more preferably at least about 0.5% and most preferably from about 0.5% to about 5.0%.

As used herein, the term "alkyl (meth)acrylate or alkyl (meth)acrylate/carboxylic stabilizer" refers to any stabilizer effective in improving the settling, storage and/or compaction properties of a high solids polymer composition, wherein said stabilizer is prepared by polymerizing a suitable alkyl (meth)acrylate, alone or in combination with a copolymerizable carboxylic moiety.

The preferred stabilizers of the instant invention are selected from the group consisting of polymers prepared from:

1. a) a $C_4$-$C_{20}$ straight or branched chain alkyl acrylate or methacrylate; and b) a polymerizable carboxylic monomer, preferably acrylic acid or methacrylic acid;

2. a) a $C_4$-$C_{20}$ alkylaryl acrylate or methacrylate; and b) a polymerizable carboxylic acid as defined above; and

3. a) a $C_4$-$C_{20}$ haloallyl acrylate or methacrylate and b) a polymerizable carboxylic acid as defined above;

wherein the weight ratio of a) :b) ranges from about 100:0 to about 75:25, preferably about 99.95:0.05 to about 90:10, more preferably from about 99.9:0.1 to about 98:2 and wherein said polymers have a weight average molecular weight of about 50,000 to about $10 \times 10^6$, preferably about 500,000 to about $8 \times 16^6$, more preferably from abourt $1 \times 10^6$ to about $6 \times 10^6$, as determined by low angle light scattering.

More preferred stabilizers are selected from the group consisting of lauryl (meth)acrylate/(meth)acrylic acid polymers; stearyl (meth)acrylate/(meth)acrylic acid polymers; hexyl (meth)acrylate/(meth)acrylic acid polymers; isodecyl (meth)acrylate/(meth)acrylic acid polymers; and 2-ethyl hexyl (meth)acrylate/(meth)acrylic acid polymers. In these preferred polymers, the (meth)acrylate moiety: (meth)acrylic acid weight ratio ranges from about 100:0 to about 75:25, preferably from about 99.95:0.05 to about 90:10, more preferably from about 99.9:0.1 to about 98:2. Further, the inventors believe that additional moieties, including virtually any copolymerizable vinyl monomer, for example acrylamide, may be included in the instant stabilizer polymers to some extent. These polymers have molecular weights ranging from about 50,000 to about $10 \times 10^6$, preferably from about 500,000 to about $8 \times 10^6$, more preferably about $1 \times 10^6$ to about $6 \times 10^6$, as determined by low angle light scattering.

The most preferred stabilizer is a polymer comprising: a) lauryl methacrylate and b) (meth)acrylic acid, wherein the weight ratio of a) :b) ranges from about 99.95:0.05 to about 90:10, more preferably from about 99.9:0.1 to about 98:2. These most preferred polymers have molecular weights ranging from about $1 \times 10^6$ to about $6 \times 10^6$, as determined by low angle light scattering.

The instant stabilizers may be prepared by conventional polymerization techniques available to those skilled in the art. For example, Example 1 of U.S. Pat. No. 4,833,198 demonstrates the preparation of a lauryl methacrylate/acrylic acid copolymer.

An effective amount of stabilizer should be used. As used herein, the term "effective amount" refers to that quantity of stabilizer necessary to improve the storage stability characteristics, i.e., settling and/or compaction characteristics, of a given polymer composition. Preferably, at least about 0.05 weight %, based on total composition weight, of a stabilizer is added, more preferably at least about 0.1 weight %, still more preferably about 0.5 to about 5%, based on total composition weight. The stabilizer is added to a high solids polymer composition after the polymerization step and preferably after one or more concentration steps.

The instant stabilizers can be added to polymer composition to be stabilized via conventional techniques available to persons skilled in the art. Mixing is preferred to distribute the stabilizers throughout the composition to be stabilized.

It is believed that the instant stabilizers act by steric stabilization, but the inventors do not wish to be bound by this mechanism.

As an example exemplary of the best mode, a starting polymer composition preferably prepared via an emulsion polymerization technique comprising an initial weight concentration of water, an initial weight concentration of a hydrophobic liquid, an initial weight concentration of at least one emulsifying surfactant, and an initial weight concentration of a water soluble polymer is dehydrated and concentrated by a process which comprises: a) diluting the starting emulsion, if the initial weight concentration of the water soluble polymer exceeds about 25% of said starting polymer composition, with a suitable hydrophobic liquid so as to produce a composition having a polymer weight concentration of from about 0.1 to about 25%, preferably from about 1 to about 15%, based on composition weight; b) dehydrating the starting polymer composition or the composition of step a), as the case may be, by evaporating water from the starting polymer composition or the polymer composition of step a), preferably via falling-film evaporation, thereby lowering said initial weight concentration of water to less than about 5%, preferably less than about 3%, more preferably to less than about 2% and most preferably to between about 0.1 to about 1.5%, and producing an evaporator concentrate; c) treating the evaporator concentrate of step b) to remove some portion of the hydrophobic liquid from said evaporator concentrate, for example by filtration, evaporation or centrifugation, preferably by centrifugation, most preferably via use of a decanter centrifuge, thereby producing: 1) a concentrated composition which is substantially a water soluble polymer and emulsifying surfactant composition in a hydrophobic liquid; and 2) a raffinate, preferably a centrifuge raffinate; and d) adding an effective amount of a lauryl methacrylate/methacrylic acid stabilizer to the concentrated composition of step c), preferably with mixing, thereby stabilizing it against compaction and/or settling. The raffinate can optionally be treated in a second separation device such as a filter, centrifuge or evaporator, preferably a partially ejecting disk centrifuge, to capture additional polymers solids and to reclaim additional hydrophobic liquid.

It is noteworthy that the polymer composition to be concentrated generally should not contain an inverting surfactant, since inverting surfactants may hinder effective dehydration in the evaporating step, particularly via falling-film evaporation. Aside from this limitation, it is believed that virtually any concentrated (i.e., about 50% polymer solids) polymer composition prepared via an emulsion polymerization technique can be stabilized. For example, commercially available emulsion polymer compositions can be used as a starting emulsion.

As examples of commercially available water-in-oil emulsion polymer compositions, one may cite the Pol-E-Z® and HYDRAID® emulsion polymers offered by Calgon Corporation.

Using either a starting polymer composition having an initial polymer weight concentration of less than about 25%, or using a polymer composition which has been diluted with a suitable hydrophobic liquid so as to produce a polymer concentration of less than about 25 weight % polymer, the instant process preferably requires dehydration via the use of a falling-film evaporator so as to remove water from the initial polymer composition having a polymer weight concentration of less than about 25%, thereby lowering the initial weight concentration of water to less than about 5%, preferably to less than about 3%, more preferably to less than about 2% and most preferably to between about 0.1 to about 1.5%, and producing an evaporator concentrate.

Falling-film evaporators expose the emulsion, dispersion or suspension to be concentrated to high temperatures, preferably under vacuum, which causes water to be quickly flashed off. Because residence times are typically short, the polymers so treated are not thermally punished to any substantial extent. The evaporator concentrate produced generally exits the evaporator at greater than about 200°F, which means that cooling prior to subsequent processing is preferred. Conventional heat exchange techniques can be used to cool the evaporator concentrate, preferably to less than about 150°F.

The preferred type of falling-film evaporator is a thin film evaporator. Thin film evaporators have a unique ability to handle heat-sensitive and time-at-temperature sensitive substances. In a typical thin film evaporator, the starting polymer composition enters the unit, which preferably but not necessarily operates under vacuum, above or before the thermal section and is distributed via the action of fixed clearance rotor blades. As the emulsion flows along or down the walls of the evaporator, a rolling fillet or bow front is generally formed on the leading edge of the blades. The turbulence and mixing action imparted to the fluid is believed to result in high heat and mass transfer rates without localized overheating. The dehydrated fluid then typically exits the bottom of the unit, with a small fraction of vaporized oil, entrained emulsion and the water vapor exiting the top.

After the preferred cooling step, the evaporator concentrate preferably passes into a centrifuge. Though, in theory, any type of centrifuge can be used to further concentrate the evaporator concentrate, a decanter-type centrifuge is preferred for this operation.

A decanter centrifuge is characterized by a cylindrical-conical rotating bowl. The high rotational speed of the bowl develops a centrifugal force which causes the polymer solids in a composition fed to the unit to be thrown out against the bowl wall, forming an annular ring. A helical screw conveyor fits inside the bowl with a small clearance between its outer edge and the inner wall of the bowl. The conveyor rotates at either a slightly lower or higher rate than the bowl. This difference in speed, known as the differential speed, causes the separated solids to be conveyed toward the conical end of the machine where they are discharged. The lighter liquid phase overflows through ports at the opposite end of the machine.

The centrifuge should have the ability to produce a centrifugal force equivalent to from between about 500 and about 10,000 times gravity, preferably from about 1,000 to about 6,000 times gravity. The centrifugal action causes the larger, heavier polymer solids to be scrolled out of the centrifuge, thereby producing a concentrated polymer and emulsifying surfactant-in-oil composition which contains in excess of about 60% polymer solids, preferably in excess of about 70% solids, and virtually no water. This primary effluent from the centrifuge is a viscous, pourable polymer/emulsifying surfactant/hydrophobic liquid composition having a viscosity of approximately 300 cps to 25,000 cps. These compositions generally contain less than 3% water, preferably less than 2% water, based on total composition weight.

As such, these compositions are referred to as non-aqueous, high solids polymer compositions. As used herein, the term "non-aqueous" refers to polymer compositions which contain less than 5% water. Additionally, a centrifuge raffinate is produced which may be further concentrated via a concentration means such as a filter, evaporator or another centrifuge, preferably by a second centrifuge. Again, it is believed that any type of centrifuge can be used to concentrate the raffinate from the first centrifuge. However, a disk type centrifuge, preferably a partially ejecting disk centrifuge, has been found to be preferred for this second centrifugal separation. The first centrifuge raffinate generally contains less than about 5 weight % polymer solids. This stream can be concentrated via the disk centrifuge to a polymer/hydrophobic liquid composition containing in excess of about 25% polymer solids. The primary effluent from the second centrifuge can be then blended with the primary effluent from the first centrifuge to produce a final dehydrated, concentrated polymer/emulsifying surfactant/hydrophobic liquid composition having in excess of about 60 weight % polymer solids, preferably in excess of about 70% polymer solids. The oil-rich raffinate from the second centrifuge can be recycled to improve the overall efficiency of the concentration process.

The instant stabilizers are then added to the composition to be stabilized by a suitable addition means. Any suitable mode of addition known in the art can be utilized. Mixing is preferred so as to distribute the stabilizer evenly throughout the composition to be stabilized.

## EXAMPLES

The following examples further define the invention. These examples are not intended to limit the invention in any way.

EXAMPLE 1. <u>Stabilizer Polymerization Procedure</u> -

Adiabatic polymerizations were run in a laboratory reaction vessel consisting of a 2 liter glass resin kettle equipped with a nitrogen purge tube, thermocouple and one 3" S.S. pitch blade turbine. This reaction vessel was then placed in a tank having a circulating mixture of 60/40 w/w ethylene glycol/water, and this system was equipped with a Parlow MIC 8200 Series process controller. Adiabatic conditions were achieved by monitoring the temperature of the ethylene glycol barrier surrounding the glass resin kettle and the temperature of the reactant mixture. The temperature of the glycol barrier was controlled 1-2° C above the mix temperature throughout the polymerization. The formulation and process used are illustrated below:

a) <u>Stabilizer Formulation:</u>

| | |
|---|---|
| Monomer Phase: | 502.53g laurylmethacryate 99% (LMA) |
| | 2.50g methacrylic acid (MAA) 490.46g solvent (Magiesol® 52)* |
| Initiators: | 0.125g VAZO® 52** |
| | 0.205g V-601*** |
| | <u>4.18 g Magiesol 52</u> |
| | 1000.0g 50% Initial Monomer Concentration |
| Post-Treatment | 0.50 g V-601 |
| | <u>4.17 g Magiesol 52</u> |
| | 1004.67g Total Charge Wt. |

b) <u>Stabilizer Polymerization Process:</u>

1. The monomer phase was prepared by charging LMA, MAA, and Magiesol 52 into the reactor.
2. Agitation was begun.
3. Sub-surface sparging of $N_2$ was begun while heating monomer to 50° C ± 1° C.
4. After a sufficient $N_2$ purge period and equilibration of the monomer mix at 50° C, the slurry of initiators (VAZO 52 and V-601 slurried in Magiesol 52) was added. Initiation occurred within 5-10 minutes.
5. After initiation of the polymerization, the $N_2$ was reduced to blanket conditions. The exothermic reaction was allowed to proceed adiabatically. A peak temperature of 95-110° occurred in 4 to 4-1/2 hours.
6. 30 minutes after peak temperature, the batch was cooled to 85-90° C for 30 minutes.
7. A pot temperature of $\geqq$ 85° C was maintained for 30 minutes.
8. The batch was then discharged. The resulting polymer was a 99.5/0.5 copolymer of laurylmethacrylate and methacrylic acid, 49.8% active.

EXAMPLE 2. <u>Measurement of Molecular Weight</u> -

Molecular weight, expressed as weight average, was determined by low angle light scattering (LALLS).

Reduced viscosity measurements were conducted on 2.5% active solutions in Isopar® M, a parafinnic hydrocarbon, commercially available from Exxon. Viscosity measurements were made at 30° C using a Cannon Kinematic viscometer ASTM size # 200.

A good correlation between LALLS Mw and reduced viscosity existed. A graph of Ln(Mw) vs. Ln $(n_{2.5\%})$ approximated a straight line with a correlation coefficient of 0.994.

Using this technique, the weight average molecular weight of the polymer of Example 1 was determined to be about 6 million.

EXAMPLE 3. <u>Generation of Unstabilized High Solids Polymer Composition:</u>

a) Thin Film Evaporation

A starting emulsion polymer composition containing 25.45% of a 90/10 mole % acrylamide/AETAC polymer (commercially available from Calgon Corporation) was diluted using Kensol® 61 to prepare a di-

* Magiesol®52 is a severely hydrotreated paraffinic hydrocarbon available from Magie Bros.
** VAZO® is 2,2'-Azobis (2,4 - dimethyl pentane nitrile, commercially available from DuPont.
*** V-601 is 2,2 Azobis (methyl isobutyrate), available from Waco Chemicals.

luted polymer composition containing the following components:

|  | Wt% |
|---|---|
| Polymer | 10.42 |
| Water | 18.12 |
| Oil | 69.80 |
| Emulsifying Surfactant System | 1.66 |
| Total | 100.00 |

This diluted starting composition was charged to a feed tank using an air powered diaphragm pump.

The evaporator rotor of a Votator 04-020 thin film evaporator was started, the evaporator was brought up to operating temperature using heated oil (120-130° C) and the unit's vacuum pump was started. The operating pressure of the evaporator was 13-15 torr.

The above described diluted polymer composition was then fed to the evaporator until steady state operation was established.

Based on operation of the thin film evaporator under steady state conditions, the following mass balance was obtained, based on 100 1bs. of diluted feed.

|  | Starting Emulsion | Evaporator Concentrate | Vapor Discharge |
|---|---|---|---|
| % Polymer | 10.42 | 13.15 | 0.00 |
| % Water | 18.12 | 0.30 | 84.98 |
| % Oil | 69.81 | 84.42 | 14.17 |
| % Inerts* | 1.66 | 2.12 | 0.85 |
|  | 100.00 | 79.20 | 20.80 |

* Inerts include various emulsifying surfactants, sodium meta bisulfite, citric acid and the sodium salt of ethylenediamine tetracetic acid.

The evaporator concentrate produced in the above example contained 0.3%, by weight, water, which means that greater than 99.8% of the water in the starting emulsion was removed.

b) Decanter Centrifuge

The evaporator concentrate from Part A was fed to an Alfa-Laval/Sharples Model P-660 decanter centrifuge. This centrifuge developed centrifugal force of 3065 X gravity.

The following material balance was obtained, based on 100 lbs. of centrifuge feed:

|  | Centrifuge Feed | Centrifuge Concentrate | Centrifuge Raffinate |
|---|---|---|---|
| % Polymer | 13.15 | 78.50 | 2.59 |
| % Water | 0.3 | 1.81 | 0.06 |
| % Oil | 84.42 | 11.13 | 96.28 |
| % Inerts | 2.12 | 8.56 | 1.10 |
|  | 100.00 | 13.92 | 86.08 |

The centrifuge step produced a polymer/emulsifying surfactant/hydrophobic liquid composition that contained 78.5% polymer solids and 1.81% water.

EXAMPLES 4-42. <u>Compaction Tests</u> -

The designated amount of stabilizer was blended into a designated amount of polymer "Cake" in an 8 oz. jar. The mix was blended for 1 hour at ~500 to 600 rpm using propeller mixing. Percent compaction was then determined by adding 150 g of cake to a 250 ml conical centrifuge tube (Corning Model #25350-250). The tube was then spun for 1 hour @ 3000 rpm using a Sorvall RC3 centrifuge. The tube was inverted and allowed to drain for precisely 2 hours. After 2 hours, the tube was weighed and the wt. % of compacted material was calculated.

The following table shows the results of stabilizing a centrifuge cake using 2 weight % (based on cake weight) of a 99.5/0.05 LMA/MAA copolymer having the reduced viscosity shown. The centrifuge cake comprised a 74.2% active 77/23 w/w acrylamide AM/AETAC coplymer:

| Example No. | Stabilizer Polymer Reduced Viscosity, $n_{2.5\%}$ | % Compaction |
|---|---|---|
| 4 | Unstabilized | 98.6 |
| 5 | 1.56 dl/g | 22.5 |
| 6 | 1.45 dl/g | 25.5 |
| 7 | 1.05 dl/g | 28.8 |
| 8 | 0.74 dl/g | 31.5 |
| 9 | 0.62 dl/g | 33.4 |
| 10 | 0.52 dl/g | 33.7 |

Various alkyl methacrylate stabilizers were prepared and evaluated at the dosages shown (% of cake weight) as stabilizers for varicus 77/23 ww AM/AETAC centrifuge cakes. Results as shown in Examples 11-23.

| Example No. | Cake Description, Stabilizer and Dosage | % Compaction |
|---|---|---|
| 11 | Unstabilized 77/23 AM/AETAC Cake #1 | 97.9 |
| 12 | Cake #1 with Polylaurylmethacrylate at 2% | 20.2 |
| 13 | Cake #1 with Poly2-ethylhexylmethacrylate at 2% | 45.5 |

| | | |
|---|---|---|
| 14 | Unstabilized Cake 77/23 AM/AETAC Cake #2 | 58.1 |
| 15 | Cake #2 with 99.5/0.5 LMA/AA @ 1% 99.5/0.5 LMA/AA at 2% | 20.0 15.4 |
| 16 | Cake #2 with 98/2 Stearylmethacrylate/AA at 1% 98/2 Stearylmethacrylate/AA at 2% | 25.7 21.4 |
| 17 | Cake #2 with 98/2 Hexyl Methacrylate/AA at 1% | 53.5 |

| | | |
|---|---|---|
| 18 | Unstabilized 77/23 AM/AETAC Cake #3 | 87.6 |
| 19 | Cake #3 with 99.5/0.5 LMA/AA at 1% | 45.6 |
| 20 | Cake #3 with 99.5/0.5 2-ethylhexylmethacrylate/AA at 2% | 50.0 |

| 21 | Unstabilized 77/23 AM/AETAC Cake #4 | 99.6 |
|---|---|---|
| 22 | Cake #4 with 99.9/0.5 LMA/MAA at 1% | 27.3 |
| 23 | Cake #4 with 99.5/0.5 Isodecylmethacrylate/MAA at 2% | 38.8 |

Using lauryl methacrylate/methacrylic acid copolymers, various ratios of monomers in the stabilizer polymer were evaluated. Results are shown in Examples 24-40.

| Ex. No. | Cake Description and LMA/MAA Stabilizer Weight Ratios | Stabilizer Reduced Viscosity (dl/g) | Stabilized Dosage | % Compaction |
|---|---|---|---|---|
| 24 | Unstabilized 77/23 AM/AETAC Cake #6 | - | - | 62.0 |
| 25 | Cake #6 99.5/0.5 | 0.49 | 1% | 25.0 |
| 26 | Cake #6 99.5/0.5 | 0.49 | 2% | 16.8 |

| 27 | Unstabilized 77/23 AM/AETAC Cake #7 | - | - | 62.3 |
|---|---|---|---|---|
| 28 | Cake #7 99.5/0.5 | 0.89 | 1% | 19.4 |
| 29 | Cake #7 99.5/0.5 | 0.89 | 2% | 14.8 |
| 30 | Cake #7 99.0/1.0 | 1.2 | 1% | 18.6 |
| 31 | Cake #7 99.0/1.0 | 1.2 | 2% | 15.1 |

| 32 | Unstabilized 77/23 AM/AETAC Cake #8 | - | - | 62.6 |
|---|---|---|---|---|
| 33 | Cake #8 98.0/2.0 | 0.19 | 1% | 27.7 |
| 34 | Cake #8 98.0/2.0 | 0.19 | 2% | 18.5 |

| 35 | Unstabilized 77/23 AM/AETAC Cake #9 | - | - | 55.5 |
|---|---|---|---|---|
| 36 | Cake #9 98.0/2.0 | 0.27 | 1% | 24.2 |
| 37 | Cake #9 98.0/2.0 | 0.27 | 2% | 16.9 |

| 38 | Unstabilized 77/23 AM/AETAC Cake #10 | - | - | 62.0 |
|---|---|---|---|---|
| 39 | Cake #10 98.0/2.0 | 0.82 | 1% | 19.0 |
| 40 | Cake #10 98.0/2.0 | 0.82 | 2% | 13.9 |

Using the procedure of Examples 4-40, emulsion polymers of different compositions were evaporated and centrifuged to provide high solids centrifuge cakes. These cakes were then stabilized with a 99.5/0.5 LMA/MAA copolymer at the dosages shown. Results are shown below.

Example 41.

A 70/30 w/w acrylamide/acrylic acid copolymer with cake activity of 78.2% was stabilized:

| Stabilizer Dosage | % Compaction |
|---|---|
| (based on cake weight) | |
| None | 99.0 |
| 1.0 | 40.9 |
| 2.0 | 32.4 |
| 3.0 | 23.8 |

Example 42.

A 40/60 ww acrylamide/acryloyloxyethyltrimethyl ammonium chloride copolymer with cake activity of 73.5% was stabilized:

| Stabilizer Dosage | % Compaction |
|---|---|
| None | 83.0 |
| 1.0 | 35.6 |
| 2.0 | 20.9 |
| 3.0 | 18.5 |

## Claims

1. A method for stabilizing a high solids polymer composition prepared via an emulsion polymerization technique, which method for stabilizing said high solids polymer composition comprises adding to said high solids polymer composition, for the purpose of stabilizing said high solids polymer composition against settling and/or compaction, an effective amount of an alkyl (meth)acrylate or an alkyl(meth)acrylate/carboxylic polymer, wherein said high solids polymer composition contains greater than about 50%, based on total composition weight, polymer solids.

2. The method of Claim 1, wherein said effective amount is at least about 0.05 weight %, based on the weight of said high solids polymer composition.

3. The method of Claim 2, wherein said alkyl (meth)acrylate or alkyl (meth)acrylate/carboxylic polymer is selected from the group consisting of polymers prepared from:
    1. a) a $C_4$ - $C_{20}$ straight or branched chain alkyl acrylate or methacrylate; and b) a polymerizable carboxylic monomer, preferably acrylic acid or methacrylic acid;
    2. a) a $C_4$ - $C_{20}$ alkylaryl acrylate or methacrylate; and b) a polymerizable carboxylic acid as defined above; and
    3. a) a $C_4$ - $C_{20}$ haloallyl acrylate or methacrylate and b) a polymerizable carboxylic acid as defined above;
    wherein the weight ratio of a) :b) ranges from about 100:0 to about 75:25, and wherein said polymer has a weight average molecular weight of about 50,000 to about $10 \times 10^6$, as determined by low angle light scattering.

4. A method for preparing a stabilized, concentrated water-in-oil polymer composition from an initial composition comprising: 1) about 25 to about 95%, based on total composition weight, of an aqueous phase comprising about 10 to about 60%, based on the weight of 1), of a water soluble polymer, and the balance substantially water; 2) about 0.5 to about 20%, based on total composition weight, of at least one emulsifying surfactant; and 3) about 25 to about 95%, based on total composition weight, of a hydrophobic liquid, which method comprises: A) dehydrating the initial composition via a dehydration means to produce a polymer/emulsifying surfactant/hydrophobic liquid composition which contains less than about 5 weight % water; B) further concentrating the composition of step A) via a concentrating means so as to remove some portion of said hydrophobic liquid therefrom, thereby producing a concentrated polymer/emulsifying surfactant/hydrophobic liquid composition and a raffinate, wherein said concentrated polymer/emulsifying surfactant/hydrophobic liquid composition contains less than about 3 weight % water, greater than about 60 weight % polymer, and about 0.1 to about 10% emulsifying surfactant; C) optionally treating said raffinate in a second separation device thereby producing a second concentrated polymer composition and a second raffinate stream; D) optionally blending said second concentrated polymer composition from said second separation device with said concentrated polymer/emulsifying surfactant/hydrophobic liquid composition; and E) adding to said concentrated polymer/emulsifying surfactant/hydrophobic liquid composition an effective amount of an alkyl (meth)acrylate or an alkyl (meth)acrylate/carboxylic acid stabilizer.

5.  A high solids polymer composition which comprises: a) greater than about 50%, based on total composition weight, polymer solids; and b) an effecive amount, for the purpose of stabilizing said high solids polymer composition against settling and/or compaction, of an alkyl (meth)acrylate/carboxylic acid polymer.

6.  The composition of Claim 5, wherein said composition contains less than about 5%, based on total composition weight, water.

7.  The composition of Claim 6, wherein said composition contains greater than about 60%, based on total composition weight, polymer solids.

8.  A water soluble polymer/hydrophobic liquid/emulsifying surfactant composition which contains less than about 5 weight % water, greater than about 50 weight % polymer solids, and at least about 0.05 weight % an alkyl (meth)acrylate or an alkyl (meth)acrylate/carboxylic acid stabilizer.